Europäisches Patentamt

European Patent Office

Office européen des brevets

(19)

(11) Veröffentlichungsnummer: **0 303 902 B1**

# (12) EUROPÄISCHE PATENTSCHRIFT

(45) Veröffentlichungstag der Patentschrift: **22.07.92**

(51) Int. Cl.⁵: **F16L 33/04**, F16B 2/08

(21) Anmeldenummer: **88112687.4**

(22) Anmeldetag: **04.08.88**

(54) Vorrichtung zum Verbinden zylindrischer Bauteile.

(30) Priorität: **18.08.87 DE 3727448**

(43) Veröffentlichungstag der Anmeldung:
**22.02.89 Patentblatt 89/08**

(45) Bekanntmachung des Hinweises auf die
Patenterteilung:
**22.07.92 Patentblatt 92/30**

(84) Benannte Vertragsstaaten:
**FR GB IT NL**

(56) Entgegenhaltungen:
**CH-A- 302 653**
**CH-A- 534 311**
**DE-A- 2 361 412**
**FR-A- 1 543 373**
**GB-A- 885 996**

(73) Patentinhaber: **ERNO Raumfahrttechnik Gesellschaft mit beschränkter Haftung**
**Hünefeldstrasse 1-5**
**W-2800 Bremen 1(DE)**

(72) Erfinder: **Hüssler, Walter, Dr.**
**Ligusterweg 10**
**W-2805 Stuhr 4(DE)**

EP 0 303 902 B1

**Beschreibung**

Die Erfindung betrifft eine Vorrichtung zum Verbinden zylindrischer Bauteile in Form eines aus zwei parallelen Strängen bestehenden Spannbandes, das die zu verbindenden Bauteile umfaßt, auf dessen Innenseite Klammerelemente angeordnet sind, die mit flanschartig ausgebildeten Ansätzen der Bauteile zusammenwirken, und bei dem die Stränge um senkrecht zur Zugrichtung des Spannbandes angeordnete Bolzen geführt sind, wobei in der Schließstellung zwei sich gegenüberliegende Bolzen über ein Spannelement lösbar miteinander verbunden sind.

Vorrichtungen dieser Art sind durch die GB-A-885 996 bekannt geworden und werden häufig im Bereich der Raumfahrttechnik eingesetzt, um Nutzlasten an Endstufen von Trägerraketen zu haltern und beim Erreichen der vorgesehenen Zielumlaufbahn durch Sprengen des Spannelementes von diesen zu lösen. Eine weitere für diesen Verwendungszweck eingesetzte Vorrichtung die auch als Marman-Spannbandverbindung bezeichnet wird und die im Prinzip in der DE-A-26 55 772 beschrieben ist, unterscheidet sich von der eingangs genannten im wesentlichen dahingehend, daß das Spannband statt zweier Stränge aus einem breiten Gurt besteht. Auch bei dieser bekannten Vorrichtung sind auf der Innenseite des Spannbandes eine Anzahl von Klammerelementen angeordnet. Letztere weisen auf ihrer Innenseite konische Ausnehmungen auf und greifen mit diesen über entsprechend geformte Flansche oder Interfaceringe, die an den zu verbindenden Endbereichen der einzelnen Bauteile angeordnet sind. Beim Sprengen des Spannelementes, das im Fall des Marman-Spannbandes ebenso wie bei der eingangs beschriebenen Vorrichtung aus einer Zugspannschraube besteht, werden diese Klammerelemente von den Flanschen oder Interfaceringen gezogen, so daß sich die Bauteile, beispielsweise eine Nutzlast und eine Trägerendstufe voneinander lösen.

Aufgabe der Erfindung ist es, eine Vorrichtung der eingangs genannten Art so auszubilden, daß diese bei möglichst geringem Eigengewicht eine hohe Tragfähigkeit aufweist und daß sie für einen möglichst weiten Bereich an Bauteildurchmessern einsetzbar ist.

Die Erfindung löst die Aufgabe, in dem sie vorsieht, daß bei einer derartigen Vorrichtung die Stränge des Spannbandes jeweils in sich geschlossen umlaufend um beide durch ein Spannelement verbundene Bolzen geführt sind und daß das Spannelement als Druckspannelement ausgebildet ist, die in radiale Gewindebohrungen der Bolzen greift.

Durch die erfindungsgemäß vorgesehene Kombination aus einer Schließeinheit mit einer Druckspannschraube einerseits und um diese Schließeinheit geschlossen umlaufende Stränge andererseits wird eine vollständige Umfassung der miteinander zu verbindenden Bauteile erreicht.

Ein Auftreten von Biegebeanspruchungen auf die Interfaceringe bzw. die Flansche, wie sie beispielsweise bei der Verwendung von Zugspannschrauben zur Verbindung der Spannbandenden dadurch auftreten können, daß die neutrale Faser des Spannbandes im Bereich der Spannschraube und der von diesen zusammengehaltenen Bolzen einen größeren Abstand von den Interfaceringen aufweist, als in anderen Bereichen, wird dadurch vermieden. Die in diesen Bereichen konzentrierten Querkräfte und die dadurch bewirkten Biegespannungen in den Interfaceringen bzw. Flanschen würden die Belastbarkeit einer derartigen Vorrichtung erheblich vermindern.

Zwar sind aus der DE-A-23 61 412, der FR-A-1.543.373 sowie der CH-A-534 311 Spannschellen bekannt, bei denen die miteinander zu verbindenden Bereiche in der Schließstellung überlappend angeordnet sind und bei denen die Vorspannung jeweils durch eine Druckspannschraube- erzeugt wird, jedoch weisen diese bekannten Spannvorrichtungen weder Klammerelemente zur Ausübung axialer Haltekräfte auf die zu verbindenden Komponenten auf noch sind bei diesen Spannschellen senkrecht zur Zugrichtung angeordnete Bolzen vorgesehen, die über ein Spannelement lösbar miteinander zu verbinden sind. Diese bekannten Vorrichtungen gehören daher einer anderen Gattung als die Spannvorrichtung gemäß der Erfindung an. Hinzu kommt, daß bei diesen bekannten Spannschellen aufgrund einer exzentrischen Anordnung von Druckspannschraube und Spanngurt eine Druckbiegebeanspruchung auf die Druckspannschraube wirkt. Dies kann bei höheren Beanspruchungen bzw. Vorspannungen zu einem Abknicken bzw. Ausbrechen der Schraubenenden aus ihren Widerlagern oder Endführungen führen. Diese bekannten Spannschellen ermöglichen daher nur für geringe Vorspannkräfte und sind für den vorgesehenen Einsatzzweck nicht geeignet.

Im folgenden soll die Erfindung anhand von in der Zeichnung dargestellten Ausführungsbeispielen näher erläutert werden. Es zeigen:

Fig. 1    den Verschlußbereich eines ersten Spannbandes,

Fig. 2    in einer Prinzipskizze die Kräfteverteilung bei einer Anordnung gemäß Fig. 1 **und**

Fig. 3 und 4    je einen Schnitt durch den Verbindungsbereich zweier Bauteile.

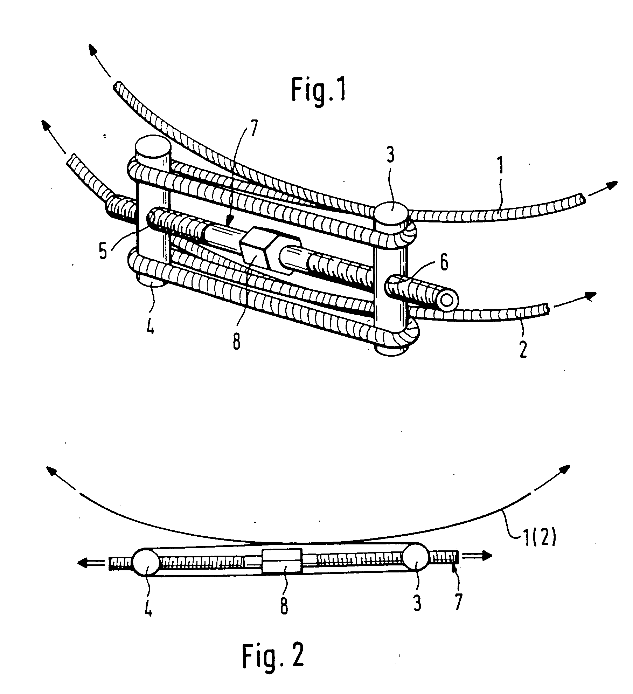

Bei der in Fig. 1 dargestellten Anordnung wird eine Verbindungsvorrichtung nach Art eines Spannbandes von zwei Spannseilen 1 und 2 gebildet, die im Abstand parallel zueinander angeordnet sind. Die Spannseile 1 und 2 sind um zwei Verbindungsbolzen 3 und 4 geschlungen, die parallel zur Längsachse der miteinander zu verbindenden hier nicht dargestellten zylindrischen Bauteile liegen. Die Verbindungsbolzen 3 und 4 sind jeweils mit mittig angeordneten, in radialer Richtung verlaufenden Gewindebohrungen 5 und 6 versehen, in die eine Druckspannschraube 7 greift, die symmetrisch zwischen den Spannseilen 1 und 2 liegt.

Über die Druckspannschraube 7, die in ihren beiden Endbereichen mit gegenläufigen Gewinden versehen ist und die in der Mitte eine feststehend angeordnete oder am Ende lösbare Einstellmutter 8 aufweist, ist der Abstand der beiden Verbindungsbolzen 3 und 4 so weit veränderbar, daß in den beiden Spannseilen 1 und 2 die für die Gewährleistung einer sicheren Verbindung erforderliche Zugspannung herrscht. Die dabei auftretende Kräfteverteilung ist anhand von Pfeilen in Fig. 2 gekennzeichnet. Die einfach gezeichneten Pfeile symbolisieren dabei Zugkräfte, während die doppelt gezeichneten Pfeile die von der Druckspannschraube 7 auf die Verbindungsbolzen 3 und 4 ausgeübten Druckkräfte symbolisieren.

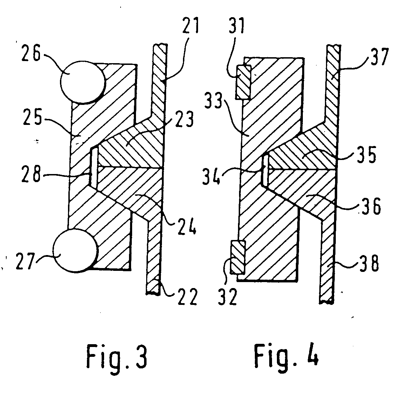

Fig. 3 zeigt in einer Schnittdarstellung den Verbindungsbereich zweier miteinander zu verbindender, in diesem Bereich zylindrisch ausgebildeter Bauteile 21 und 22. Die beiden Bauteile sind dabei in ihren Endbereichen jeweils mit einseitig konisch geformten Flanschen oder Interfaceringen 23 bzw. 24 versehen. Über diese greifen Klammerelemente 25, von denen eines in der Figur dargestellt ist und die an Spannseilen 26 und 27 gehalten sind. Letztere entsprechen den Spannseilen 1 und 2 in Fig. 1.

Jedes Klammerelement 25 weist auf seiner Innenseite eine konische Ausnehmung 28 auf, die der Form der Flansche oder Interfaceringe 23 und 24 angepaßt ist.

In der Schließstellung der Vorrichtung werden die Klammerelemente 25, die äquidistant über den Umfang der Spannseile 26 und 27 verteilt angeordnet sind, infolge der in der in diesen Seilen herrschenden Zugspannung gegen die Verbindungsstelle gedrückt und pressen somit die beiden Flansche oder Interfaceringe 23 und 24 aufeinander. Da die beiden Spannseile 26 und 27 dabei in einem Abstand ober - bzw. unterhalb der Verbindungsstelle angreifen, wird ein Aufbiegen der Klammerelemente 25 und damit ein Auseinanderklaffen der beiden Flansche unter der Betriebslast verhindert.

Die in Fig. 4 dargestellte Anordnung schließlich unterscheidet sind von der vorherstehend beschriebenen dahingehend, daß anstelle der Spannseile in diesem Fall zwei Spanngurte 31 und 32 vorgesehen sind, an denen Klammerelemente 33 gehaltert sind. Auch in diesem Fall werden durch die konische Ausnehmung 34 der Klammerelemente 33 zwei Flansche bzw. Interfaceringe 35,36, die an zylindrischen Bauteilen 37 und 38 angeordnet sind, zusammengehalten.

Durch die Wahl entsprechen langer Spanngurte bzw. Spannseile und die Anordnung der erforderlichen Anzahl von Klammerelementen kann die vorstehend beschriebene Spannbandvorrichtung für praktisch alle Durchmesser an Interfaceringen bzw. Flanschen eingesetzt werden. Darunter auch für solche mit sehr großen Durchmessern, bei denen bisher aufgrund der beschriebenen Probleme ein Einsatz derartiger Spannbandverbindungen als nicht möglich angesehen wurde und stattdessen aufwendigere und vor allem schwerere Verbindungsvorrichtungen eingesetzt wurden. Bei der Auslegung der erforderlichen Festigkeiten braucht bei Verwendung der vorstehend beschriebenen Anordnung das Auftreten von etwaigen Biegemomenten an den Interfaceringen nicht berücksichtigt zu werden. Vielmehr bilden die von den Spannseilen bzw. Spannbändern umschlossenen Interfaceringe ein System hoher Tragfähigkeit, die im wesentlichen nur durch die Festigkeit der Interfaceringe oder Flansche begrenzt wird.

Anzumerken ist, daß es im Rahmen der Erfindung dabei sowohl möglich ist, auf den gesamten Umfang lediglich eine oder mehrere aus den Verbindungsbolzen und der Druckspannschraube bestehende Schließvorrichtung anzuordnen, so daß zwei endlose Spannseile geeigneter Abmessungen verwendet werden können.

Durch die größere Anzahl der Spannelemente kann die Zugspannung in den Spannseilen oder Spanngurten annähernd konstant gehalten und der Reibungseinfluß somit minimiert werden.

**Patentansprüche**

1. Vorrichtung zum Verbinden zylindrischer Bauteile in Form eines aus zwei parallelen Strängen bestehenden Spannbandes, das die zu verbindenden Bauteile umfaßt, auf dessen Innenseite Klammerelemente angeordnet sind, die mit flanschartig ausgebildeten Ansätzen der Bauteile zusammenwirken, und bei dem die Stränge um senkrecht zur Zugrichtung des Spannbandes angeordnete Bolzen geführt sind, wobei in der Schließstellung zwei sich gegenüberliegende Bolzen über ein Spannelement lösbar miteinander verbunden sind, dadurch gekennzeichnet, daß die Stränge (1,2,26,27,31,32) jeweils in sich geschlossen umlaufend um beide durch ein Spannelement (7) verbundene Bolzen (3,4) geführt sind und daß das Spannelement (7) als Druckspannschraube ausgebildet ist, die in radiale Gewindebohrungen ( 5,6) der Bolzen greift.

2. Vorrichtung nach Anspruch 1, dadurch gekennzeichnet, daß das Spannband aus je einem Ober- und unterhalb des Druckspannelementes (7) angeordneten Spanngurt (13,14) besteht.

3. Vorrichtung nach Anspruch 1, dadurch gekennzeichnet, daß das Spannband aus je einem ober- und unterhalb des Druckspannelementes (7) angeordneten Spannseil (1,2) besteht.

4. Vorrichtung nach einem der Ansprüche 1 bis 3, dadurch gekennzeichnet, daß in Umfangsrichtung ein oder mehrere jeweils aus Bolzen (3,4,12,15) sowie einer Druckspannschraube (7) bestehende Schließeinheiten angeordnet sind.

## Claims

1. A device for connecting cylindrical components, in the form of a tightening band which comprises two parallel strands and encloses the components to be connected, on the inside of which are arranged bracket elements which cooperate with extensions of the components, said extensions being formed as flanges, and in which the strands are passed around pins arranged perpendicular to the direction of tension of the tightening band, in which in the closed position two opposite pins are connected together releasably via a tightening element, **characterised in that** the strands (1,2,26,27,31,32) are each passed continuously around the two pins (3,4) which are connected by a tightening element (7) and that the tightening element (7) is formed as a compression-type twinbuckle which engages radial threaded bores (5,6) of the pins.

2. A device according to claim 1, **characterised in that** the tightening band comprises in each case a tightening belt (13,14) which is arranged above and below the pressure tightening element (7).

3. A device according to claim 1, **characterised in that** the tightening band comprises in each case a tightening cable (1,2) arranged above and below the pressure tightening element (7).

4. A device according to any one of claims 1 to 3, **characterised in that** in a peripheral direction one or more closing units is arranged comprising pins (3,4,12,15) respectively and a pressure tightening screw (7).

## Revendications

1. Dispositif pour relier des pièces de construction cylindriques sous forme d'un collier de fixation consistant en deux branches parallèles, collier qui entoure les pièces de construction à relier, et sur le côté intérieur duquel sont disposés des éléments d'agrafage, qui coopèrent avec des appendices des pièces de construction en forme de brides, et dans lequel les branches passent autour de tiges disposées perpendiculairement au sens de traction du collier de fixation, deux tiges se faisant vis-à-vis étant reliées ensemble en position de fermeture par l'intermédiaire d'un élément de serrage de façon deserrable, dispositif caractérisé en ce que les branches (1, 2, 26, 27, 31, 32) fermées sur elles-mêmes passent chacune autour des deux tiges (3, 4) reliées par un élément de serrage et en ce que l'élément de serrage (7) est conçu comme une vis de tension à poussée, qui vient en prise dans les trous filetés radiaux (5, 6) des tiges.

2. Dispositif selon la revendication 1, caractérisé en ce que le collier de serrage consiste en une ceinture de serrage (13, 14) disposée respectivement en-dessus et en-dessous de l'élément de serrage (7).

3. Dispositif selon la revendication 1, caractérisé en ce que le collier de serrage consiste en un câble de serrage (1, 2) disposé respectivement en-dessus et en-dessous de l'élément de serrage (7).

4. Dispositif selon l'une des revendications 1 à 3, caractérisé en ce que sont disposés dans le sens du pourtour un ou plusieurs ensembles de fermeture consistant en tiges (3, 4, 12, 13) ainsi qu'en une vis de serrage (7).

# Fig.1

# Fig. 2

Fig. 3        Fig. 4